# EUROPÄISCHE PATENTSCHRIFT

(11) **EP 2 937 189 B1**
(45) Veröffentlichungstag und Bekanntmachung des Hinweises auf die Patenterteilung: **09.08.2017**
(21) Anmeldenummer: 15162728.8
(22) Anmeldetag: 08.04.2015
(51) Int. Cl.: B25J 1/02, B25J 15/12, B25J 19/06, B25J 9/00, B25J 1/04

(54) **PROBENGREIFVORRICHTUNG UND MESSEINRICHTUNG MIT EINER PROBENGREIFVORRICHTUNG**
SAMPLE GRABBING DEVICE AND MEASURING DEVICE WITH A SAMPLE GRABBING DEVICE
DISPOSITIF PRÉHENSEUR D'ÉCHANTILLON ET DISPOSITIF DE MESURE DOTÉ D'UN DISPOSITIF PRÉHENSEUR D'ÉCHANTILLON

(30) Priorität: 24.04.2014 DE 102014207736
(43) Veröffentlichungstag der Anmeldung: 28.10.2015
(73) Patentinhaber: Deutsches Elektronen-Synchrotron DESY, 22607 Hamburg (DE)
(72) Erfinder: Stübe, Nicolas, 22761 Hamburg (DE)
(74) Vertreter: Seemann & Partner Patentanwälte mbB

(56) Entgegenhaltungen:
- CN-A- 1 931 529
- DE-B3-102005 046 160
- DE-U1-202012 012 820
- US-A1- 2004 012 217
- US-A1- 2011 109 110

## Beschreibung

Die Erfindung betrifft eine Probengreifvorrichtung mit einem zentralen Bauteil und zumindest zwei länglichen Greifarmen, wobei sich die Greifarme in einer Längsrichtung der Probengreifvorrichtung erstrecken und bewegbar mit dem zentralen Bauteil verbunden sind, und wobei die Greifarme jeweils ein vorderes Ende und ein in Längsrichtung gegenüberliegendes hinteres Ende aufweisen, wobei an den vorderen Enden der Greifarme eine Probengreifvorrichtung zur mittelbaren oder unmittelbaren Aufnahme einer Probe vorhanden ist, und wobei an den hinteren Enden der Greifarme eine Betätigungsvorrichtung vorhanden ist, welches es ermöglicht, die Greifarme manuell und/oder mit Hilfe eine Aktuators zur Aufnahme oder Freigabe der Probe zu schwenken.

Ferner betrifft die Erfindung eine Messeinrichtung, insbesondere eine Messeinrichtung für Experimente mit Röntgenstrahlung, mit einer solchen Probengreifvorrichtung.

Probengreifvorrichtungen werden zur Handhabung von Proben verwendet, um sie beispielsweise einer Experimentierstation zuzuführen. Insbesondere für Proben, die in einem tiefkalten Kältemedium (Kryoflüssigkeit) gelagert werden, sind Probengreifvorrichtungen erforderlich, um die Proben oder Probenhalter, einem mit dem tiefkalten Kältemedium gefüllten Vorratsbehälter zu entnehmen.

Die Handhabung einer Probengreifvorrichtung kann sowohl manuell als auch unter Verwendung eines Roboters erfolgen. Um eine große Anzahl unterschiedlicher Proben vollautomatisch mit Röntgenstrahlung untersuchen zu können, entnimmt ein Roboter mithilfe einer Probengreifvorrichtung eine Probe nach der anderen einem Kryogefäß und führt sie einer Untersuchungsstation zu. Derartig automatisierte Messeinrichtungen kommen beispielsweise bei der Strukturaufklärung von Proteinen zum Einsatz.

Ein beispielsweise für die Untersuchung von Proteinproben eingesetzter Probenhalter umfasst eine Basis, auf der eine nadelförmige Spitze aufgesetzt ist, an deren Ende sich die Probe befindet. Die Probengreifvorrichtung ergreift den Probenhalter seitlich an seiner Basis.

Eine für die Handhabung solcher Probenhalter geeignete Probengreifvorrichtung geht beispielsweise aus DE 10 2012 211 380 A1 hervor. Die dort gezeigte Probengreifvorrichtung umfasst zwei schwenkbare Arme, welche mit einem Festkörpergelenk an einem zentralen Körper befestigt sind. Durch elastische Verformung des Festkörpergelenks ist eine Schwenkbewegung der Greifarme um wenige Grad möglich, so dass durch Öffnen und Schließen eines vorderen Endbereichs der Probengreifvorrichtung ein Probenhalter aufgenommen oder freigegeben werden kann.

In einer vollautomatischen Messstation werden die Verfahrwege des zur Handhabung der Proben eingesetzten Roboters vielfach im warmen Zustand eingefahren bzw. justiert. Wird der Aufbau im Betrieb anschließend zumindest teilweise abgekühlt, so verändern sich unvermeidbar - zumindest teilweise - dessen Dimensionen. Trotz sorgfältiger Justage ist es daher nicht auszuschließen, dass bei der Aufnahme eines Probenhalters oder einer Probe aus dem Kryogefäß eine Kollision zwischen der Gefäßwand und der Probengreifvorrichtung stattfindet. Um eine Beschädigung der Probengreifvorrichtung und des Kryogefäßes zu vermeiden, sind Probengreifer bekannt, welche eine geringe lineare Verschiebung der sich in Längsrichtung der Probengreifvorrichtung erstreckenden Greifarme erlauben.

Eine entsprechende Probengreifvorrichtung geht beispielsweise aus US 2004/0012217 A1 hervor. Eine längsaxiale Verschiebung der Greifarme ist möglich, indem sich der Innenring eines Kalottenlagers auf einer Welle in Längsrichtung des Greifers gegen die Kraft einer Rückstellfeder verschiebt. Diese Konstruktion ist technisch aufwendig.

Als Alternative ist ein pneumatischer Kollisionsschutz bekannt, wie er beispielsweise unter der Typenbezeichnung "CSR 50" von Sommer Automatic vertrieben wird. Dieser Kollisionsschutz wird zwischen einer Probengreifvorrichtung und einer roboterseitigen Aufnahme angeordnet. Durch Befüllen des Pneumatikzylinders mit Druckluft wird ein Kolben in eine Grundstellung versetzt. Bei einer äußeren Krafteinwirkung wird der Kolben in den Zylinder hineinverlagert, so dass die Probengreifvorrichtung einer äußeren Kraft ausweicht. Der in der Kammer entstehende Überdruck entweicht über ein Überdruckventil. Auch der pneumatische Kollisionsschutz ist technisch aufwendig zu realisieren.

Es ist eine Aufgabe der Erfindung, eine Probengreifvorrichtung sowie eine Messeinrichtung anzugeben, wobei der konstruktive Aufwand möglichst gering gehalten werden soll.

Die Aufgabe wird gelöst durch eine Probengreifvorrichtung gemäß Anspruch 1 sowie durch eine Messeinrichtung gemäß Anspruch 10. Vorteilhafte Weiterbildungen ergeben sich aus den abhängigen Ansprüchen.

Die Aufgabe wird gelöst durch eine erfindungsgemäße Probengreifvorrichtung, welche ein zentrales Bauteil und zumindest zwei längliche Greifarme umfasst. Das zentrale Bauteil ist insbesondere zur mechanischen Halterung der Probengreifvorrichtung mit einer entsprechenden Aufnahme versehen. Beispielsweise ist diese Aufnahme für einen Roboter geeignet, so dass dieser die Probengreifvorrichtung betätigen kann. Die Probengreifvorrichtung kann beispielsweise mit oder an einem Gelenkarmroboter oder einem Portalroboter verwendet werden.

Die Greifarme der erfindungsgemäßen Probengreifvorrichtung erstrecken sich in einer Längsrichtung der Probengreifvorrichtung und sind bewegbar mit dem zentralen Bauteil verbunden. Insbesondere ist das zentrale Bauteil länglich und erstreckt sich ebenfalls in Längsrichtung der Probengreifvorrichtung. An einem vorderen Ende der Greifarme befindet sich eine Greifvorrichtung zur mittelbaren oder unmittelbaren Aufnahme einer Probe. Beispielsweise ist die Greifvorrichtung dazu eingerichtet, eine auf einem Probenhalter vorgesehene Probe zu ergreifen, indem sie eine Basis des Probenhalters seitlich ergreift. Ferner ist die Greifvorrichtung zu diesem Zweck beispielsweise so ausgestaltet, dass die vorderen Enden der Greifarme als L-förmige Profile ausgebildet sind, welche die Basis des Probenhalters von den Seiten her hintergreifen.

Ferner ist ein dem vorderen Ende in Längsrichtung der Probengreifvorrichtung gegenüberliegendes hinteres Ende der Greifarme der erfindungsgemäßen Probengreifvorrichtung zur manuellen Betätigung oder zur Betätigung mit Hilfe eine Aktuators mit einer Betätigungsvorrichtung versehen. Bei dieser handelt es sich beispielsweise um einen zur manuellen Betätigung vorgesehenen Griff oder um eine entsprechende Aufnahme bzw. einen Adapter zur Betätigung und/oder Befestigung der Greifarme an einem Aktuator.

Die erfindungsgemäße Probengreifvorrichtung zeichnet sich insbesondere dadurch aus, dass zumindest ein Greifarm über ein elastisches Festkörperverbindungselement mit dem zentralen Bauteil gekoppelt ist. Umfasst die Probengreifvorrichtung mehrere, beispielsweise zwei, drei oder eine größere Anzahl von Greifarmen, so ist insbesondere jeder dieser Greifarme mit zumindest einem Festkörperverbindungselement mit dem zentralen Bauteil verbunden.

Das Festkörperverbindungselement der erfindungsgemäßen Probengreifvorrichtung umfasst zumindest einen mäanderförmigen Bereich. Als mäanderförmig wird im Kontext der vorliegenden Beschreibung eine Struktur mit mehreren aufeinander folgenden Biegungen oder Bögen verstanden. Insbesondere umfasst eine mäanderförmige Struktur also zumindest zwei Biegungen.

Ein erstes Ende des mäanderförmigen Bereichs, welches am Beginn des mäanderförmigen Bereichs liegt, ist mit dem zentralen Bauteil gekoppelt. Insbesondere ist dieses erste Ende des mäanderförmigen Bereichs mittelbar oder unmittelbar mit dem zentralen Bauteil verbunden. Ein am Ende des mäanderförmigen Bereichs liegendes zweites Ende des mäanderförmigen Bereichs ist mit dem Greifarm gekoppelt. Ebenso wie das erste Ende ist auch dieses zweite Ende des mäanderförmigen Bereichs insbesondere mittelbar oder unmittelbar mit dem angrenzenden Bauteil, in diesem Fall dem Greifarm, verbunden.

Das Festkörperverbindungselement ist durch elastische Verformung des mäanderförmigen Bereichs in der Lage, eine Schwenkbewegung der Greifarme und eine lineare Bewegung der Greifarme gegenüber dem zentralen Bauteil zu ermöglichen. Vorteilhaft vereint das Festkörperverbindungselement die Funktion eines Gelenks mit der Funktion einer linearen Führung.

Das Festkörperverbindungselement in der erfindungsgemäßen Probengreifvorrichtung erweitert die Funktion eines Festkörpergelenks um die Funktion einer Verbindung, welche eine lineare Bewegung ermöglicht.

Als Festkörpergelenk wird im Kontext der vorliegenden Beschreibung ein Bauteil verstanden, welches eine Relativbewegung zwischen zwei Starrkörpern durch elastische Verformung, d.h. Biegung, erlaubt. Ein Festkörpergelenk ist kein "echtes" Gelenk im Sinne eines kinematischen Paars relativ zueinander beweglicher Bauteile, sondern beruht auf dem Prinzip der elastischen Verformung eines insbesondere verjüngten Bereichs. Die Funktion des Festkörpergelenks wird durch einen Bereich verminderter Biegesteifigkeit relativ zu zwei angrenzenden Bereichen höherer Biegesteifigkeit erreicht.

Auch das Festkörperverbindungselement umfasst Bereiche hoher und verminderter Biegesteifigkeit. Der mäanderförmige Bereich ist im Vergleich zu den angrenzenden Bereichen elastischer. Er weist eine geringere Biegesteifigkeit als die angrenzenden Bereiche auf.

Der Probengreifer vereint vorteilhaft die für das Ergreifen der Probe notwendige Mechanik, welche insbesondere durch die Schwenkbewegung der Greifarme bereitgestellt wird, mit einem Kollisionsschutz. Dieser Kollisionsschutz ist durch die lineare Bewegbarkeit der Greifarme in Längsrichtung der Probengreifvorrichtung gegeben. Ein wesentlicher Vorteil gegenüber herkömmlichen Systemen ist, dass die Greifarme bei einer Kollision einen definierten Weg in Richtung der Längsachse des Probengreifers elastisch nachgeben können, ohne dass die Gefahr für eine Beschädigung des Probengreifers oder eines Vorratsbehältnisses besteht.

Die Realisierung der Probengreifvorrichtung unter Verwendung eines Festkörperverbindungselements ist insbesondere im Hinblick auf eine Anwendung, bei denen Proben aus einer kryogenen Umgebung entnommen werden, besonders vorteilhaft. Beim Ergreifen der Probe sinkt die Temperatur der Probengreifvorrichtung zumindest im vorderen Bereich unvermeidbar bis auf tiefe Temperaturen. Eine bereichsweise auftretende Vereisung der Probengreifvorrichtung ist in vielen Fällen unvermeidbar. Ein Festkörperverbindungselement ist im Hinblick auf seine mechanische Funktionalität gegenüber Vereisungen sehr unempfindlich, da es praktisch keine beweglichen Teile aufweist. Vorteilhaft kann daher darauf verzichtet werden, die Probengreifvorrichtung in den kritischen Bereichen zu heizen, so wie es bei herkömmlichen Probengreifvorrichtungen vielfach der Fall ist.

Gemäß einer vorteilhaften Ausführungsform ist die Probengreifvorrichtung dadurch fortgebildet, dass eine Schwenkrichtung der Schwenkbewegung zumindest näherungsweise senkrecht zu der Längsrichtung orientiert ist. Ferner ist insbesondere vorgesehen, dass eine Translationsrichtung der linearen Bewegung zumindest näherungsweise parallel zu der Längsrichtung orientiert ist.

Im Verlauf der Schwenkbewegung verändert sich die Richtung der Schwenkbewegung kontinuierlich. Unter einer Schwenkrichtung wird im Kontext der vorliegenden Beschreibung eine anfängliche Richtung der Schwenkbewegung aus einer lastfreien Ausgangs- oder Nulllage heraus verstanden.

Durch die in Längsrichtung der Probengreifvorrichtung mögliche lineare Bewegung der Greifarme führt eine Kollision des Probengreifers, beispielsweise mit dem Boden eines Vorratsbehältnisses, nicht notwendiger Weise zu einer Beschädigung der Probengreifvorrichtung oder des Vorratsbehältnisses. Die Probengreifvorrichtung ist in der Lage, eine gewisse mechanische Belastung in Längsrichtung federnd aufzunehmen. Es hat sich in der Praxis herausgestellt, dass eine frontale Kollision in Längsrichtung eine der am häufigsten auftretenden Art von Kollisionen darstellt. Die Probengreifvorrichtung gemäß der genannten Ausführungsform ist daher vorteilhaft ggü. solchen Kollisionen unempfindlich.

Ferner ist die Probengreifvorrichtung gemäß einer weiteren Ausführungsform dadurch fortgebildet, dass das Festkörperverbindungselement längere und kürzere Abschnitte umfasst. Die längeren und kürzeren Abschnitte sind abwechselnd aufeinanderfolgend angeordnet und bilden den mäanderförmigen Bereich. Insbesondere sind die Abschnitte stegförmig und/oder stabförmig. Dies betrifft sowohl die längeren als auch die kürzeren Abschnitte.

Vorteilhaft ist die erste Längsrichtung zumindest einer Teilanzahl der längeren Abschnitte des mäanderförmigen Bereichs so orientiert, dass sie mit der Längsrichtung der Probengreifvorrichtung einen größeren Winkel einschließt als eine zweite Längsrichtung zumindest einer Teilanzahl der kürzeren Abschnitte. Insbesondere ist die erste Längsrichtung der längeren Abschnitte des mäanderförmigen Bereichs zumindest näherungsweise senkrecht zu der Längsrichtung der Probengreifvorrichtung orientiert. Die zweite Längsrichtung der kürzeren Abschnitte ist insbesondere zumindest näherungsweise parallel zu der Längsrichtung der Probengreifvorrichtung orientiert. Dies betrifft zumindest eine Teilanzahl der längeren bzw. kürzeren Abschnitte, welche den mäanderförmigen Bereich des Festkörperverbindungselements bilden.

Die genannten Orientierungen der längeren und kürzeren Abschnitte des mäanderförmigen Bereichs erlauben eine elastische Verformung der längeren Abschnitte quer zu Ihrer jeweiligen Längsrichtung, so dass der mäanderförmige Bereich insgesamt eine lineare Bewegung der Greifarme gegenüber dem zentralen Bauteil ermöglicht.

Die mechanischen Eigenschaften des Festkörperverbindungselements lassen sich durch das verwendete Material sowie durch ein Längenverhältnis der längeren und kürzeren Abschnitte einstellen. Hierzu ist gemäß einer Ausführungsform vorgesehen, dass die längeren Abschnitte zumindest näherungsweise um einen Faktor 2, 3, 4, 5, 7, 10, 15, 20, 25 oder mehr als 25 länger sind als die kürzeren Abschnitte. Die Länge der Abschnitte wird jeweils in deren Längsrichtung gemessen.

Gemäß einer weiteren Ausführungsform sind das zentrale Bauteil, das Festkörperverbindungselement und der zumindest eine über das Festkörperverbindungselement mit dem zentralen Bauteil verbundene Greifarm einstoffig ausgeführt. Mit anderen Worten sind die genannten Bauteile einstückig bzw. stoffeinteilig ausgeführt. Beispielsweise sind die genannten Teile aus einem einzigen, gemeinsamen und homogenen Rohling hergestellt. Ein zu diesem Zweck geeignetes Herstellungsverfahren ist beispielsweise die Funkenerosion. Die Bauteile sind homogen bezüglich ihrer Materialzusammensetzung. Es sind zwischen den genannten Teilen keine lösbaren oder unlösbaren Verbindungen, wie beispielsweise Schraub- oder Schweißverbindungen, vorgesehen.

Ferner ist die Probengreifvorrichtung dadurch fortgebildet, dass sie zumindest eine Kontakthalterung umfasst, in oder an der zumindest ein Überlastkontakt aufgenommen ist. Die Kontaktfläche des Überlastkontakts wirkt mit einem an dem zumindest einen Greifarm vorhandenen Anschlag in Längsrichtung der Probengreifvorrichtung zusammen. Dies bewirkt, dass eine lineare Bewegung des Greifarms in Längsrichtung, welche ein vorgegebenes Maß überschreitet, eine elektrische Trennung zwischen der Kontaktfläche und dem Anschlag bewirkt. Um die Größe der zulässigen Längsverschiebung einstellen zu können, ist die Kontakthalterung über ein Federelement mit dem zentralen Bauteil in Längsrichtung verschiebbar verbunden. Es ist ein Justierelement vorgesehen, beispielsweise eine Stellschraube, welche eine Verschiebung der Kontakthalterung in Längsrichtung entgegen einer Federkraft des Federelements ermöglicht. Durch die von dem Justierelement aufgebrachte Vorspannung zwischen der Kontakthalterung und dem zentralen Bauteil ist eine Vorspannung zwischen der Kontaktfläche und dem Anschlag einstellbar.

Tritt eine Kollision der Probengreifvorrichtung, genauer gesagt der Greifarme, in Längsrichtung auf, so erfolgt zunächst eine Entlastung des vorgespannten Federelements. Erst wenn die Verschiebung der Greifarme so groß ist, dass die Neutralstellung des Federelements erreicht wird, öffnet der elektrische Kontakt zwischen der Kontaktfläche und dem Anschlag.

Das Federelement ist insbesondere als elastisches Verbindungselement umfassend einen weiteren mäanderförmigen Bereich ausgestaltet. Dieser weitere mäanderförmige Bereich umfasst insbesondere, ähnlich wie der mäanderförmige Bereich des elastischen Festkörperverbindungselements, längere und kürzere Abschnitte. Diese sind zumindest näherungsweise ebenso orientiert wie diejenigen des elastischen Festkörperverbindungselements. Ferner ist insbesondere vorgesehen, dass auch dieser weitere mäanderförmige Bereich, insbesondere gemeinsam mit dem zentralen Bauteil, einstoffig ist.

Die Probengreifvorrichtung ist insbesondere mit einer Notaus- oder Endabschaltungsvorrichtung versehen. Diese detektiert den elektrischen Kontakt zwischen der Kontaktfläche und dem Anschlag. Eine Notaus- oder Endabschaltung wird ausgelöst, wenn dieser elektrische Kontakt geöffnet wird. Zu diesem Zweck ist die Notaus- oder Endabschaltungsvorrichtung beispielsweise elektrisch mit den Überlastkontakten und dem zentralen Element verbunden. Diese Notaus- bzw. Endabschaltungsvorrichtung detektiert, ob ein elektrischer Pfad zwischen den Überlastkontakten und der Greifvorrichtung insbesondere zu dem zentralen Bauteil vorhanden ist oder nicht. Wird eine Unterbrechung des elektrischen Pfads festgestellt, so wird dies als Hinweis auf eine Kollision gewertet und eine Notausschaltung ausgelöst. Die Notausschaltung betrifft beispielsweise den Roboter, an dem die Probengreifvorrichtung vorgesehen ist.

Ferner ist gemäß einer weiteren Ausführungsform vorgesehen, dass an dem Greifarm ein Anschlag vorhanden ist, der mit einem weiteren Anschlag zusammenwirkt. Dieser weitere Anschlag ist an dem zentralen Element vorhanden. So ist es möglich, die lineare Bewegung des zumindest einen Greifarms in Längsrichtung der Probengreifvorrichtung auf einen Maximalwert zu begrenzen.

Der Anschlag bewirkt gemeinsam mit dem weiteren Anschlag, dass das Festkörperverbindungselement nicht überlastet wird. Wie jede flexible Festkörperverbindung ist auch das Festkörperverbindungselement nur bis zu einem vorgegebenen Maximalwert elastisch verformbar bzw. belastbar. Die in diesem Zusammenhang tolerierbaren Bewegungen werden durch den weiteren Anschlag auf einen Maximalwert begrenzt.

Ferner ist die Probengreifvorrichtung dadurch fortgebildet, dass das zentrale Element, der zumindest eine Greifarm und das Festkörperverbindungselement aus einem Metall, insbesondere aus Edelstahl, weiterhin insbesondere aus Titan, hergestellt sind. Insbesondere ist das zentrale Element, der zumindest eine Greifarm und das Festkörperverbindungselement zum weit überwiegenden Teil aus einem der genannten Materialen hergestellt. Die genannten Metalle sind vorteilhaft tieftemperaturfest, so dass sich die Probengreifvorrichtung insbesondere zum Ergreifen von Proben aus kryogenen Umgebungen eignet.

Die Aufgabe wird ferner gelöst durch eine erfindungsgemäße Messeinrichtung. Diese umfasst einen Vorratsbehälter, einen Roboter und eine Messstation zur Aufnahme zumindest einer Probe. Der Roboter umfasst zur Entnahme der zumindest einen Probe aus dem Vorratsbehälter eine Probengreifvorrichtung gemäß einem oder mehreren der genannten Ausführungsformen.

Insbesondere handelt es sich bei der Messeinrichtung um eine Messeinrichtung zur Untersuchung von Proben mittels Röntgenstrahlung. Der Vorratsbehälter ist beispielsweise ein tieftemperaturfester Vorratsbehälter zur Aufnahme eines tiefkalten Kältemediums wie beispielsweise flüssigem Stickstoff oder Helium. Bei dem Roboter handelt es sich beispielsweise um einen Schwenkarm- oder Portalroboter, insbesondere um einen Industrieroboter. Die Messstation ist beispielsweise als Goniometer ausgestaltet. So ist die Messeinrichtung insbesondere für Röntgenmessungen oder Röntgenuntersuchungen geeignet.

Die Messeinrichtung ist für Messaufgaben geeignet, bei denen eine Vielzahl von Röntgenmessungen an einer großen Anzahl von Proben durchgeführt wird. Sind außerdem Proben zur Untersuchung vorgesehen, die nicht temperaturstabil sind, werden die Proben also vor der Messung in einem tiefkalten Kältemedium gelagert, ist die Messeinrichtung, welche sich einer erfindungsgemäßen Probengreifeinrichtung bedient, besonders geeignet.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine Probengreifvorrichtung gemäß einem Ausführungsbeispiel, in vereinfachter Draufsicht und im geschlossenen Zustand,
- Fig. 2: eine vereinfachte Draufsicht der Probengreifvorrichtung im geöffneten Zustand,
- Fig. 3: eine vereinfachte Detailansicht eines zentralen Bereichs der Probengreifvorrichtung, in einem Längsschnitt,
- Fig. 4: eine vereinfachte Ausschnittsvergrößerung des in Fig. 3 dargestellten Bereichs der Probengreifvorrichtung im Bereich eines zentralen Bauteils,
- Fig. 5: eine vereinfachte Draufsicht auf eine Probengreifvorrichtung, entsprechend dem in Fig. 3 dargestellten Ausschnitt, wobei die Greifarme der Probengreifvorrichtung in geöffnetem Zustand gezeigt sind,
- Fig. 6: eine weitere vereinfachte Draufsicht auf die Probengreifvorrichtung, entsprechend dem in Fig. 3 dargestellten Ausschnitt, wobei die Greifarme in einer Längsrichtung der Probengreifvorrichtung verschoben dargestellt sind,
- Fig. 7: eine vereinfachte perspektivische Darstellung einer röntgenographischen Messeinrichtung.

In den Zeichnungen sind jeweils gleiche oder gleichartige Elemente und/oder Teile mit denselben Bezugsziffern versehen, so dass von einer erneuten Vorstellung jeweils abgesehen wird.

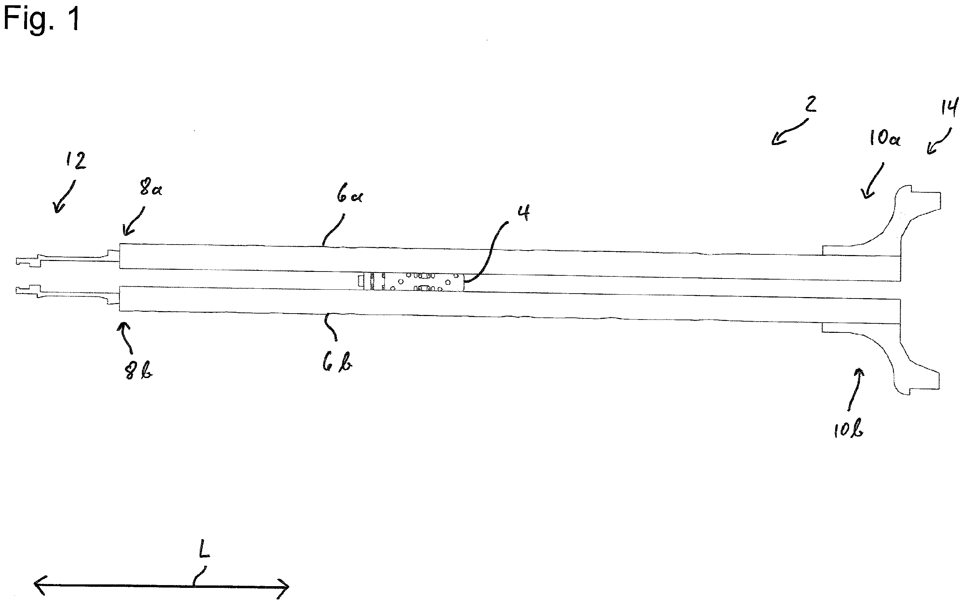

Fig. 1 zeigt in vereinfachter Draufsicht eine Probengreifvorrichtung 2, umfassend ein zentrales Bauteil 4 sowie einen ersten länglichen Greifarm 6a und einen zweiten länglichen Greifarm 6b. Die Greifarme 6a, 6b erstrecken sich in einer Längsrichtung L der Probengreifvorrichtung 2. Die Greifarme 6a, 6b sind bewegbar mit dem zentralen Bauteil 4 verbunden. Die Greifarme 6a, 6b umfassen jeweils ein vorderes Ende 8a, 8b sowie ein in Längsrichtung L gegenüberliegendes hinteres Ende 10a, 10b.

An den vorderen Enden 8a, 8b der Greifarme 6a, 6b ist eine Greifvorrichtung 12 vorhanden, welche dazu eingerichtet ist, eine (nicht dargestellte) Probe mittelbar oder unmittelbar aufzunehmen. Gemäß dem in Fig. 1 dargestellten Ausführungsbeispiel, handelt es sich bei der Greifvorrichtung 12 um längliche Bauteile. Sie sind jeweils endseitig mit einem hakenförmigen Vorsprung versehen, der dazu vorgesehen ist, eine Basis eines Probenhalters seitlich zu ergreifen bzw. zu hintergreifen. An den hinteren Enden 10a, 10b ist eine Betätigungsvorrichtung 14, beispielsweise ein Adapter, vorgesehen, welche zur Betätigung der Greifarme 6a, 6b mit einem insbesondere pneumatisch angetriebenen Aktuator eingerichtet ist.

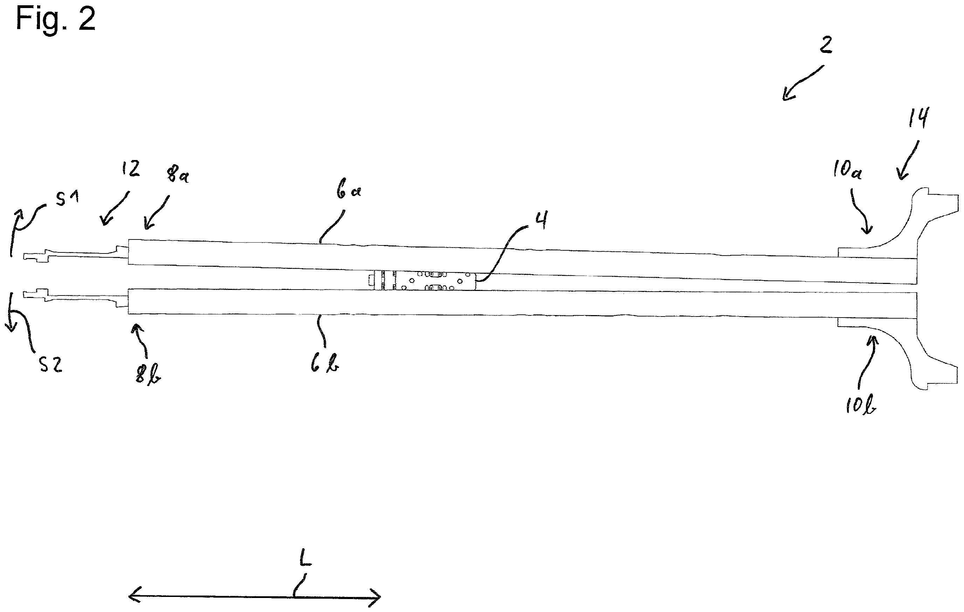

Fig. 1 zeigt die Probengreifvorrichtung 2 im geschlossenen Zustand. In der vereinfachten Draufsicht von Fig. 2 ist die Probengreifvorrichtung 2 im geöffneten Zustand dargestellt.

Zum Öffnen der Greifarme 6a, 6b führen diese eine Schwenkbewegung aus. Der erste Greifarm 6a schwenkt ausgehend von seiner in Fig. 1 dargestellten Ausgangslage in einer ersten Schwenkrichtung S1 in die in Fig. 2 dargestellte Position. Der zweite Greifarm 6b schwenkt in einer zweiten Schwenkrichtung S2, welche der ersten Schwenkrichtung S1 entgegengesetzt ist, von der in Fig. 1 dargestellten Ausgangsposition in die in Fig. 2 dargestellte, geöffnete Position. Zum Öffnen der Greifvorrichtung 12 werden die Greifarme 6a, 6b an ihren hinteren Enden 10a, 10b zusammengedrückt. Folglich öffnen sich die an den vorderen Enden 8a, 8b vorhandenen hakenförmigen Vorsprünge, welche die Greifvorrichtung 12 bilden, um beispielsweise eine Probe oder einen Probenhalter aufzunehmen oder abzusetzen.

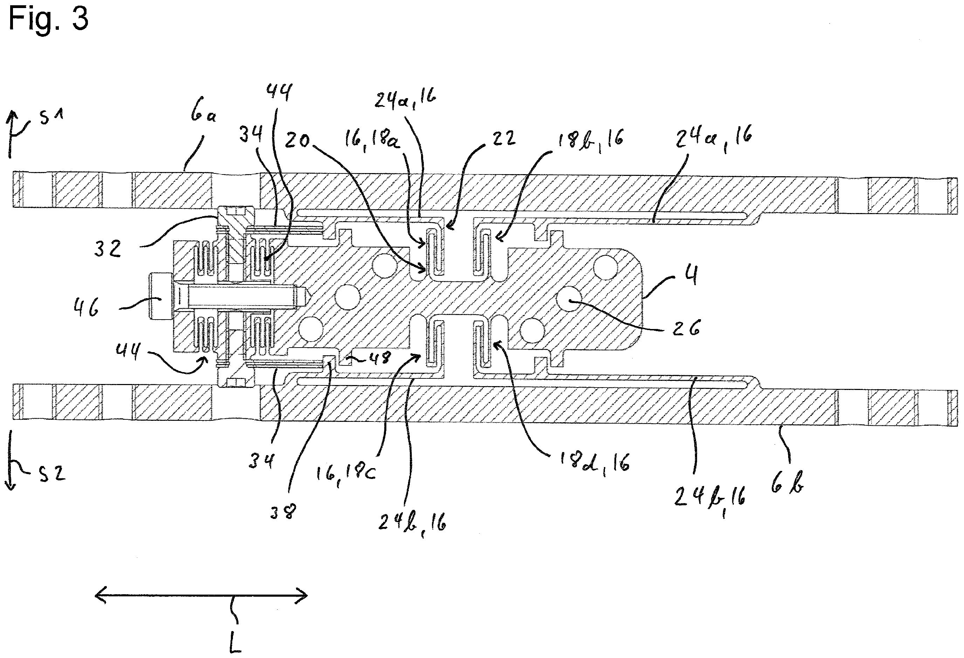

Fig. 3 zeigt eine vereinfachte Detailansicht eines zentralen Bereichs der Probengreifvorrichtung 2 in einem Längsschnitt. Der erste Greifarm 6a und der zweite Greifarm 6b sind lediglich abschnittsweise dargestellt. Die Greifarme 6a, 6b sind über ein elastisches Festkörperverbindungselement 16 mit dem zentralen Bauteil 4 gekoppelt.

Zur Aufnahme der Probengreifvorrichtung 2, beispielsweise mit Hilfe eines Roboters, ist das zentrale Bauteil 4 mit einer Aufnahme in Form mehrerer Bohrungen 26 versehen. Lediglich aus Gründen der Übersichtlichkeit sind nur einige der Bohrungen 26 mit Bezugszeichen versehen.

Das in Fig. 3 dargestellte Ausführungsbeispiel umfasst beispielhaft vier mäanderförmige Bereiche 18a bis 18d. Lediglich aus Gründen der Übersichtlichkeit ist das erste Ende 20 und das zweite Ende 22 lediglich eines dieser mäanderförmigen Bereiche 18a bis 18d mit Bezugszeichen versehen. Das zweite Ende 22 der jeweiligen mäanderförmigen Bereiche 18 ist mittelbar mit dem ersten Greifarm 6a bzw. dem zweiten Greifarm 6b verbunden. Die mäanderförmigen Bereiche 18a bis 18d sind über sich in Längsrichtung L erstreckende erste bzw. zweite Verbindungsstege 24a, 24b mit dem ersten bzw. zweiten Greifarm 6a, 6b verbunden. Das Festkörperverbindungselement 16 umfasst gemäß dem in Fig. 3 dargestellten Ausführungsbeispiel beispielhaft neben den vier mäanderförmigen Bereichen 18a bis 18d auch die ersten und zweiten Stege 24a, 24b.

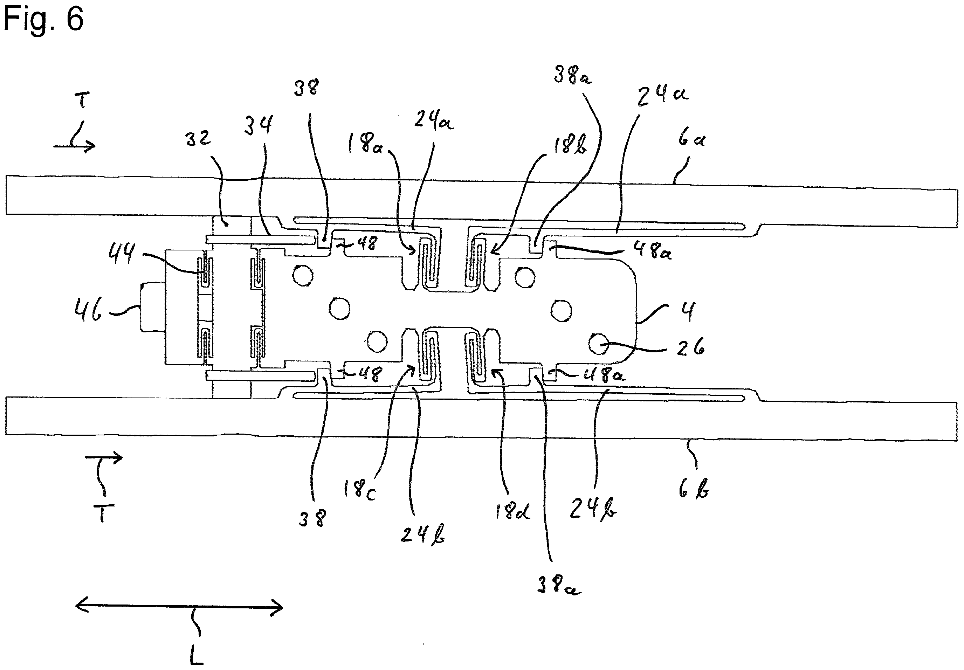

Das Festkörperverbindungselement 16 ist so eingerichtet, dass es durch elastische Verformung des mäanderförmigen Bereichs 18a bis 18d sowohl eine Schwenkbewegung als auch eine lineare Bewegung der Greifarme 6a, 6b ermöglicht. Die Schwenkbewegung der Greifarme 6a, 6b erfolgt in die jeweilige Schwenkrichtung S1 bzw. S2 des ersten bzw. zweiten Schwenkarms 6a, 6b. Die lineare Bewegung der Greifarme 6a, 6b erfolgt in einer Translationsrichtung T, welche parallel zur Längsrichtung L der Probengreifvorrichtung 2 liegt (vgl. Fig. 6).

Die erste und zweite Schwenkrichtung S1, S2 sind zumindest näherungsweise senkrecht zu der Längsrichtung L orientiert. Mit Bezug auf die Richtung der Schwenkbewegung der Greifarme 6a, 6b wird deren beginnende Bewegung aus der in Fig. 3 gezeigten Ausgangslage heraus betrachtet.

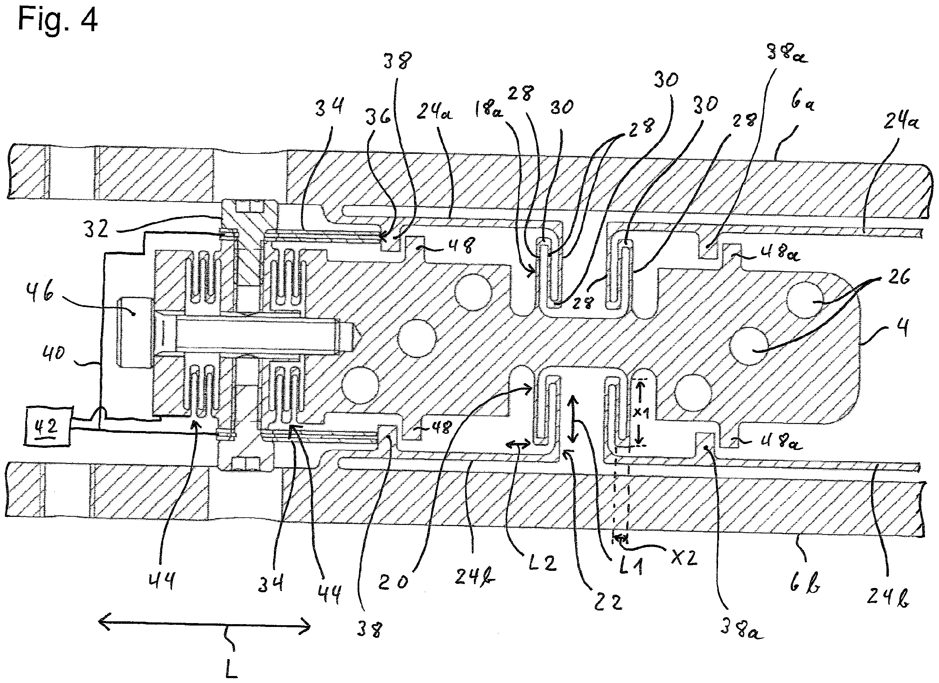

Fig. 4 zeigt eine vereinfachte Ausschnittsvergrößerung des in Fig. 3 dargestellten Bereichs der Probengreifvorrichtung 2. Die mäanderförmigen Bereiche 18a bis 18d des Festkörperverbindungselements 16 umfassen längere Abschnitte 28 und kürzere Abschnitte 30, von denen aus Gründen der Übersichtlichkeit lediglich einige mit Bezugszeichen versehen sind. Die längeren und kürzeren Abschnitte 28, 30 sind aufeinanderfolgend angeordnet. Sie bilden die mäanderförmigen Bereiche 18a bis 18d. Mit anderen Worten sind die längeren und kürzeren Abschnitte 28, 30 ausgehend von dem ersten Ende 20 des mäanderförmigen Bereichs 18a bis 18d in Richtung des zweiten Endes 22 des mäanderförmigen Bereichs 18a bis 18d hintereinander angeordnet. Selbstverständlich betrifft dies ebenso eine Betrachtung der mäanderförmigen Bereiche 18a bis 18d ausgehend von deren zweiten Enden 22 in Richtung der ersten Enden 20.

Eine erste Längsrichtung L1 der längeren Abschnitte 28 des mäanderförmigen Bereichs 18a bis 18d schließt mit der Längsrichtung L der Probengreifvorrichtung 2 einen größeren Winkel ein als eine zweite Längsrichtung L2 der kürzeren Abschnitte 30. Dies trifft zumindest für eine Teilanzahl der längeren Abschnitte 28 und eine Teilanzahl der kürzeren Abschnitte 30 zu. Gemäß dem in Fig. 4 dargestellten Ausführungsbeispiel ist die erste Längsrichtung L1 der längeren Abschnitte 28 zumindest näherungsweise senkrecht zu der Längsrichtung L der Probengreifvorrichtung 2 orientiert. Die zweite Längsrichtung L2 der kürzeren Abschnitte 30 ist beispielhaft zumindest näherungsweise parallel zu der Längsrichtung L. Dies betrifft beispielhaft alle Abschnitte 28, 30.

Gemäß weiteren, nicht dargestellten Ausführungsbeispielen, sind die längeren Abschnitte 28 des mäanderförmigen Bereichs 18a bis 18d nicht senkrecht zu der Längsrichtung L orientiert, sondern schließen mit dieser einen Winkel zwischen beispielsweise 60° und 90° ein. Ebenso ist es nicht notwendig, dass die kürzeren Abschnitte 30 stets parallel zu der Längsrichtung L orientiert sind. Die kürzeren Abschnitte 30 schließen beispielsweise einen Winkel zwischen 0° und 30° mit der Längsrichtung L ein.

Eine Schwenkbewegung der Greifarme 6a, 6b erfolgt insbesondere über elastische Verformung bzw. Verbiegung der längeren Abschnitte 28 in einer Richtung quer zu deren erster Längsrichtung L1. Eine lineare Bewegung der Greifarme 6a, 6b erfolgt ebenfalls hauptsächlich über eine elastische Verformung bzw. Verbiegung der längeren Abschnitte 28, wobei sich eine veränderte Biegelinie der Abschnitte 28 ergibt. Während sich im Fall einer Schwenkbewegung der Greifarme 6a, 6b eine Biegelinie mit gleichmäßiger Krümmung einstellt, ist diese im Fall einer Kollision näherungsweise S-förmig. Die letztere Biegelinie weist also zwei Abschnitte mit zwei entgegengesetzten Krümmungsrichtungen auf. Die lineare Bewegung der Greifarme 6a, 6b erfolgt ferner durch eine elastische Verformung der Verbindungsstege 24a, 24b.

Um die beschriebene elastische Verformung des mäanderförmigen Bereichs 18a bis 18d des Festkörperverbindungselements 16 zu ermöglichen, ist insbesondere vorgesehen, dass ein Längenverhältnis zwischen einer in der ersten Längsrichtung L1 gemessenen ersten Länge X1 der längeren Abschnitte 28 und einer in der zweiten Längsrichtung L2 gemessenen zweiten Länge X2 der kürzeren Abschnitte 30 unterschiedlich ist. Insbesondere ist die erste Länge X1 um einen Faktor 2, 3, 4, 5, 7, 10, 15, 20, 25 oder mehr als 25 größer als die zweite Länge X2. Die längeren Abschnitte 28 und die kürzeren Abschnitte 30 sind beispielsweise stabförmig oder stegförmig.

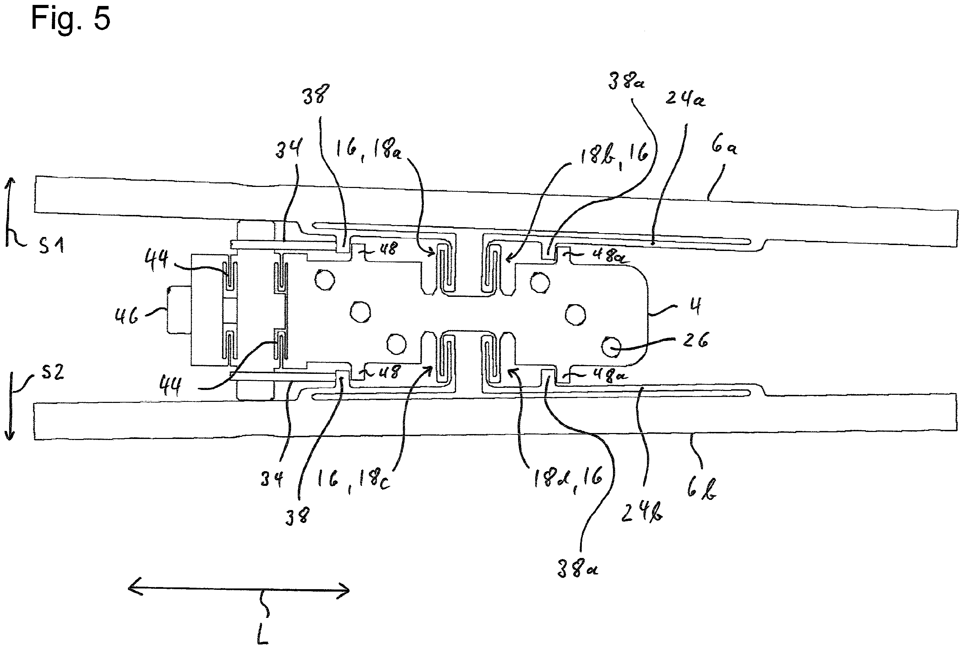

Fig. 5 zeigt eine vereinfachte Draufsicht auf die Probengreifvorrichtung 2 entsprechend dem in Fig. 3 dargestellten Ausschnitt. Die Greifarme 6a, 6b der Probengreifvorrichtung 2 sind in geöffnetem Zustand gezeigt.

Fig. 6 zeigt eine weitere vereinfachte Draufsicht auf die Probengreifvorrichtung 2 entsprechend dem in Fig. 3 dargestellten Ausschnitt. Die Greifarme 6a, 6b der Probengreifvorrichtung 2 sind in Längsrichtung L verschoben. Eine solche Verschiebung der Greifarme 6a, 6b tritt beispielsweise auf, wenn eine Kollision der Greifvorrichtung 12 mit einer Wand eines Vorratsbehältnisses beim Ergreifen einer Probe auftritt. Derartige Kollisionen sind vielfach nicht zu vermeiden, wenn Proben oder Probenhalter einem tiefkalten Kältemedium entnommen werden. Vorteilhaft erlaubt das Festkörperverbindungselement 16 eine lineare Bewegung der Greifarme 6a, 6b in Translationsrichtung T, parallel zur Längsrichtung L, um auf diese Weise einer Beschädigung der Probengreifvorrichtung 2 oder des Probengefäßes vorzubeugen.

Insbesondere sind das zentrale Bauteil 4, das Festkörperverbindungselement 16, insbesondere der erste bis vierte mäanderförmige Bereich 18a bis 18d und die Greifarme 6a, 6b der Probengreifvorrichtung 2 einstoffig ausgeführt. Mit anderen Worten findet sich zwischen den genannten Bauteilen weder eine lösbare noch eine unlösbare Verbindung. Die gesamte Probengreifvorrichtung 2 ist beispielsweise mithilfe von Funkenerosion aus einem einzigen Rohling hergestellt. Geeignete Materialien für die Probengreifvorrichtung 2 sind beispielsweise Edelstahl oder Titan. Diese Materialien sind tieftemperaturfest, so dass die Probengreifvorrichtung 2 insbesondere zur Entnahme von Proben aus tiefkalten Medien geeignet ist.

Die in Fig. 4 gezeigte Probengreifvorrichtung 2 umfasst ferner eine Kontakthalterung 32, in oder an der zumindest ein Überlastkontakt 34 aufgenommen ist. Beispielhaft umfasst die dort gezeigte Probengreifvorrichtung 2 zwei Überlastkontakte 34. Eine Kontaktfläche 36 der Überlastkontakte 34 wirkt jeweils mit einem Anschlag 38 in Längsrichtung L zusammen. Die Anschläge 38 sind an den Greifarmen 6a, 6b vorgesehen. Eine lineare Bewegung der Greifarme 6a, 6b, welche ein vorgegebenes Maß überschreitet, führt zu einer elektrischen Trennung zwischen zumindest einer der Kontaktflächen 36 und einem der Anschläge 38 des ersten Greifarms 6a bzw. zweiten Greifarms 6b.

Diese elektrische Trennung wird detektiert, indem die Überlastkontakte 34 mittels geeigneter elektrischer Verbindungsleitungen 40 mit einer Steuereinheit 42 verbunden sind. Die Steuereinheit 42 ist außerdem mit dem zentralen Bauteil 4 elektrisch verbunden. Da die an den Greifarmen 6a, 6b vorhandenen Anschläge 38 mit dem zentralen Bauteil 4 über das Festkörperverbindungselement 18a bis 18d in elektrischem Kontakt stehen, ist die Steuereinheit 42 in der Lage festzustellen, ob der elektrische Kontakt zwischen den Kontaktflächen 36 der Überlastkontakte 34 und den Anschlägen 38 unterbrochen ist.

Der elektrische Kontakt zwischen den Kontaktflächen 36 und den Anschlägen 38 wird unterbrochen, wenn die Verschiebung der Greifarme 6a, 6b in Längsrichtung L ein vorgegebenes Maß überschreitet. Dieses Maß ist durch ein Federelement 44, welches die Kontakthalterung 32 mit dem zentralen Bauteil 4 verbindet, einstellbar. Genauer gesagt ist ein Justierelement 46, im dargestellten Ausführungsbeispiel eine Stellschraube, vorgesehen, mit deren Hilfe die Kontakthalterung 32 entgegen der Federkraft des Federelements 44 gegenüber dem zentralen Bauteil 4 verschiebbar verbunden ist.

Mithilfe des Justierelements 46 ist es möglich, eine Vorspannung zwischen der Kontaktfläche 36 des Überlastkontakts 34 und den Anschlägen 38 an den Greifarmen 6a, 6b einzustellen. Wird diese Vorspannung überwunden, so öffnet der elektrische Kontakt zwischen der Kontaktfläche 36 des Überlastkontakts 34 und dem Anschlag 38. Eine solche Unterbrechung des elektrischen Kontakts detektiert die Steuereinheit 42, welche in Reaktion darauf insbesondere ein Notaus-Signal weiterleitet. Der Zustand, in dem der elektrische Kontakt zwischen der Kontaktfläche 36 des Überlastkontakts 34 und dem Anschlag 38 geöffnet ist, zeigt beispielhaft Fig. 6.

Um einer Überlastung des Festkörperverbindungselements 16 vorzubeugen, wirken die an den Greifarmen 6a, 6b vorhandenen Anschläge 38 mit weiteren Anschlägen 48 zusammen, welche sich an dem zentralen Bauteil 4 befinden. Diese weiteren Anschlägen 48 an dem zentralen Bauteil 4 begrenzen die lineare Bewegung der Greifarme 6a, 6b in Längsrichtung L auf einen Maximalwert.

Bei den gezeigten Ausführungsbeispielen sind außerdem zu diesem Zweck zusätzliche Anschläge 38a, welche mit den Greifarmen 6a, 6b verbunden sind, und zusätzliche weitere Anschläge 48a, welche mit dem zentralen Bauteil 4 verbunden sind, vorgesehen.

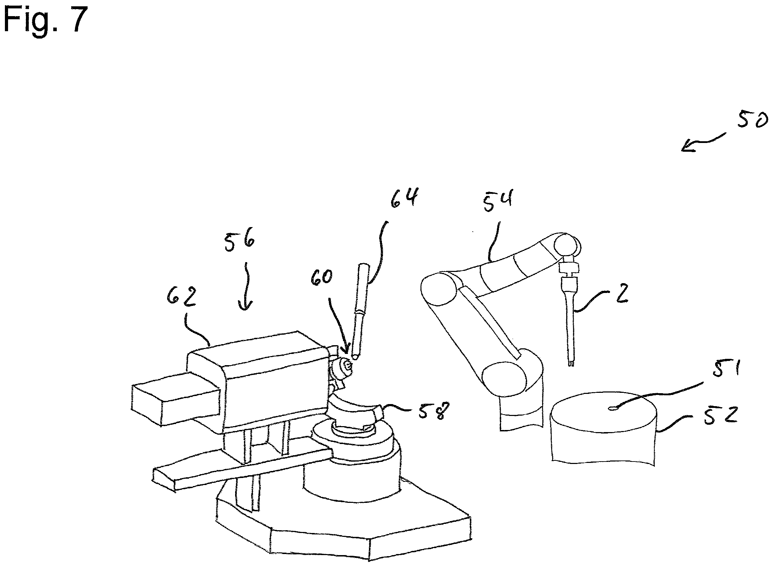

Fig. 7 zeigt eine Messeinrichtung 50 in vereinfachter perspektivischer Ansicht, bei der es sich beispielhaft um eine Messeinrichtung zur Untersuchung von Proben mittels Röntgenstrahlung handelt. Sie umfasst einen Vorratsbehälter 52, bei dem es sich insbesondere um einen tieftemperaturfesten Vorratsbehälter 52 zur Aufnahme eines tiefkalten Kältemediums handelt. Der Vorratsbehälter 52 ist insbesondere zur Aufnahme von temperatursensiblen Proben, wie beispielsweise Proteinkristallen eingerichtet. Ferner umfasst die Messeinrichtung 50 einen Roboter 54, bei dem es sich beispielhaft um einen Schwenkarmroboter handelt. Der Roboter 54 ist dazu eingerichtet, eine Probengreifvorrichtung 2 zu handhaben. Insbesondere ist der Roboter 54 zur Verwendung mit der Probengreifvorrichtung 2 vorgesehen.

Der Roboter 54 entnimmt Proben oder Probenhalter aus dem Vorratsbehälter 52, und führt diese der Messstation 56 zu. Hierzu ist eine Zugangsöffnung 51 in dem Vorratsbehälter 52 vorgesehen. Die Messstation 56 umfasst beispielhaft ein Goniometer 58, in dessen Zentrum eine Probenaufnahme 60 bzw. eine Aufnahme für einen Probenhalter vorhanden ist. Die Probe wird beispielsweise mithilfe eines Röntgenstrahls untersucht. Das Signal wird mithilfe einer Detektionseinheit 62 erfasst und steht der weiteren Auswertung zur Verfügung. Um insbesondere tiefkalte Proben während der Untersuchung auf einem niedrigen Temperaturniveau zu halten, ist eine Zuführung 64 vorgesehen, mit deren Hilfe ein tiefkaltes Gas, beispielsweise Stickstoff, zur Kühlung der Probe zugeführt werden kann.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein. Im Rahmen der Erfindung sind Merkmale, die mit "insbesondere" oder "vorzugsweise" gekennzeichnet sind, als fakultative Merkmale zu verstehen.

### Bezugszeichenliste

- 2: Probengreifvorrichtung
- 4: zentrales Bauteil
- 6a: erster Greifarm
- 6b: zweiter Greifarm
- 8a, 8b: vorderes Ende
- 10a, 10b: hinteres Ende
- 12: Greifvorrichtung
- 14: Betätigungsvorrichtung
- 16: Festkörperverbindungselement
- 18a - 18d: mäanderförmiger Bereich
- 20: erstes Ende des mäanderförmigen Bereichs
- 22: zweites Ende des mäanderförmigen Bereichs
- 24a, 24b: Verbindungsstege
- 26: Bohrungen
- 28: längerer Abschnitt
- 30: kürzerer Abschnitt
- 32: Kontakthalterung
- 34: Überlastkontakt
- 36: Kontaktfläche
- 38, 38a: Anschlag
- 40: elektrische Verbindungsleitung
- 42: Steuereinheit
- 44: Federelement
- 46: Justierelement
- 48, 48a: weiterer Anschlag
- 50: Messeinrichtung
- 51: Zugangsöffnung
- 52: Vorratsbehälter
- 54: Roboter
- 56: Messstation
- 58: Goniometer
- 60: Probenaufnahme
- 62: Detektionseinheit
- 64: Zuführung

- S1: erste Schwenkrichtung
- S2: zweite Schwenkrichtung
- L: Längsrichtung
- L1: erste Längsrichtung
- L2: zweite Längsrichtung
- T: Translationsrichtung
- X1: erste Länge
- X2: zweite Länge

## Patentansprüche

1. Probengreifvorrichtung (2) mit einem zentralen Bauteil (4) und zumindest zwei länglichen Greifarmen (6a, 6b), wobei sich die Greifarme (6a, 6b) in einer Längsrichtung (L) der Probengreifvorrichtung (2) erstrecken und bewegbar mit dem zentralen Bauteil (4) verbunden sind, wobei die Greifarme (6a, 6b) jeweils ein vorderes Ende (8a, 8b) und ein in Längsrichtung (L) gegenüberliegendes hinteres Ende (10a, 10b) aufweisen, wobei an den vorderen Enden (8a, 8b) der Greifarme (6a, 6b) eine Greifvorrichtung (12) zur mittelbaren oder unmittelbaren Aufnahme einer Probe vorhanden ist, und wobei an den hinteren Enden (10a, 10b) der Greifarme (6a, 6b) eine Betätigungsvorrichtung (14) vorhanden ist, welche es ermöglicht, die Greifarme (6a, 6b) manuell und/oder mit Hilfe eines Aktuators zur Aufnahme oder Freigabe der Probe zu schwenken, wobei zumindest ein Greifarm (6a, 6b) über ein elastisches Festkörperverbindungselement (16) mit dem zentralen Bauteil (4) gekoppelt ist, **dadurch gekennzeichnet, dass** das Festkörperverbindungselement (16) einen mäanderförmigen Bereich (18a - 18d) umfasst, dessen zu Beginn des mäanderförmigen Bereichs (18a - 18d) vorhandenes erstes Ende (20) mit dem zentralen Bauteil (4) und dessen am Ende des mäanderförmigen Bereichs (18a - 18d) liegendes zweites Ende (22) mit dem Greifarm (6a, 6b) gekoppelt ist, wobei das Festkörperverbindungselement (16) durch elastische Verformung des mäanderförmigen Bereichs (18a - 18d) eine Schwenkbewegung des zumindest einen Greifarms (6a, 6b) und eine lineare Bewegung des zumindest einen Greifarms (6a, 6b) gegenüber dem zentralen Bauteil (4) ermöglicht.

2. Probengreifvorrichtung (2) nach Anspruch 1, bei der eine Schwenkrichtung (S1, S2) der Schwenkbewegung zumindest näherungsweise senkrecht zu der Längsrichtung (L) orientiert ist und eine Translationsrichtung (T) der linearen Bewegung zumindest näherungsweise parallel zu der Längsrichtung (L) orientiert ist.

3. Probengreifvorrichtung (2) nach Anspruch 1 oder 2, bei der das Festkörperverbindungselement (16) längere und kürzere Abschnitte (28, 30) umfasst, die abwechselnd aufeinanderfolgend angeordnet sind und den mäanderförmigen Bereich (18a - 18d) bilden.

4. Probengreifvorrichtung (2) nach Anspruch 3, wobei eine erste Längsrichtung (X1) zumindest einer Teilanzahl der längeren Abschnitte (28) des mäanderförmigen Bereichs (18a - 18d) mit der Längsrichtung (L) der Probengreifvorrichtung (2) einen größeren Winkel einschließt als eine zweite Längsrichtung (X2) zumindest einer Teilanzahl der kürzeren Abschnitte (30).

5. Probengreifvorrichtung (2) nach Anspruch 3 oder 4, bei der die längeren Abschnitte (28) zumindest näherungsweise um einen Faktor 2, 3, 4, 5, 7, 10, 15, 20, 25 oder mehr als 25 länger sind als die kürzeren Abschnitte (30).

6. Probengreifvorrichtung (2) nach einem der vorhergehenden Ansprüche, bei der das zentrale Bauteil (4), das Festkörperverbindungselement (16) und der zumindest eine über das Festkörperverbindungselement (16) mit dem zentralen Bauteil (4) verbundene Greifarm (6a, 6b) einstoffig sind.

7. Probengreifvorrichtung (2) nach einem der vorhergehenden Ansprüche, ferner umfassend eine Kontakthalterung (32), in oder an der zumindest ein Überlastkontakt (34) aufgenommen ist, dessen Kontaktfläche (36) mit einem an dem zumindest einen Greifarm (6a, 6b) vorhandenen Anschlag (38) in Längsrichtung (L) der Probengreifvorrichtung (2) zusammenwirkt, so dass eine lineare Bewegung des Greifarms (6a, 6b) in Längsrichtung (L), welche ein vorgegebenes Maß überschreitet, eine elektrische Trennung zwischen der Kontaktfläche (36) und dem Anschlag (38) bewirkt, wobei die Kontakthalterung (32) über ein Federelement (44) mit dem zentralen Bauteil (4) in Längsrichtung (L) verschiebbar verbunden ist, und wobei ein Justierelement (46), insbesondere eine Stellschraube vorgesehen ist, welche eine Verschiebung der Kontakthalterung (32) in Längsrichtung (L) entgegen einer Federkraft des Federelements (44) ermöglicht, so dass durch das Justierelement (46) eine Vorspannung zwischen der Kontaktfläche (36) und dem Anschlag (38) einstellbar ist.

8. Probengreifvorrichtung (2) nach einem der vorhergehenden Ansprüche, bei der an dem zumindest einen Greifarm (6a, 6b) ein Anschlag (38, 38a) vorhanden ist, der mit einem weiteren Anschlag (48, 48a) zusammenwirkt, der an dem zentralen Element (4) vorhanden ist, so dass die lineare Bewegung des zumindest einen Greifarms (6a, 6b) in Längsaxialrichtung (L) der Probengreifvorrichtung (2) auf einen Maximalwert begrenzt ist.

9. Probengreifvorrichtung (2) nach einem der vorhergehenden Ansprüche, wobei das zentrale Element (4), der zumindest eine Greifarm (6a, 6b) und das Festkörperverbindungselement (16) aus einem Metall, insbesondere aus Edelstahl, weiterhin insbesondere aus Titan hergestellt sind.

10. Messeinrichtung (50), insbesondere Messeinrichtung zur Untersuchung von Proben mittels Röntgenstrahlung, umfassend einen Vorratsbehälter (52), insbesondere einen tieftemperaturfesten Vorratsbehälter (52) zur Aufnahme eines tiefkalten Kältemediums, einen Roboter (54), insbesondere einen Schwenkarm- oder Portalroboter, und eine Messstation (56), insbesondere ein Goniometer (58) umfassend, zur Aufnahme zumindest einer Probe während einer Untersuchung, insbesondere einer Röntgenmessung, wobei der Roboter (54) zur Entnahme der zumindest einen Probe aus dem Vorratsbehälter (52) eine Probengreifvorrichtung (2) nach einem der vorhergehenden Ansprüche umfasst.

## Claims

1. A sample grabbing apparatus (2) with a central component (4) and at least two elongate grabbing arms (6a, 6b), wherein the grabbing arms (6a, 6b) extend in a longitudinal direction (L) of the sample grabbing apparatus (2) and are moveably connected to the central component (4), wherein each of the grabbing arms (6a, 6b) has a front end (8a, 8b) and a rear end (10a, 10b), which is opposite the front end in the longitudinal direction (L), wherein a grabbing apparatus (12) is provided on the front ends (8a, 8b) of the grabbing arms (6a, 6b) for the indirect or direct receipt of a sample, and wherein an actuating apparatus (14) is provided on the rear ends (10a, 10b) of the grabbing arms (6a, 6b), said actuating apparatus permitting the grabbing arms (6a, 6b) to pivot manually and/or with the aid of an actuator in order to receive or release the sample, wherein at least one grabbing arm (6a, 6b) is coupled with the central component (4) via an elastic solid connecting element (16), **characterized in that** the solid connecting element (16) has a meandering region (18a, 18d), in which the first end (20) at the beginning of the meandering region (18a - 18d) is coupled with the central component (4) and the second end (22) at the end of the meandering region (18a - 18d) is coupled with the grabbing arm (6a, 6b), wherein the elastic deformation of the meandering region (18a - 18d) makes it possible for the solid connecting element (16) to permit a pivot movement of the at least one grabbing arm (6a, 6b) and a linear movement of the at least one grabbing arm (6a, 6b) relative to the central component (4).

2. The sample grabbing apparatus (2) according to claim 1, in which a pivot direction (S1, S2) of the pivot movement is oriented at least approximately perpendicular to the longitudinal direction (L), and a translation direction (T) of the linear movement is oriented at least approximately parallel to the longitudinal direction (L).

3. The sample grabbing apparatus (2) according to claim 1 or 2, in which the solid connecting element (16) has longer and shorter sections (28, 30), which are arranged alternatingly in succession and form the meandering region (18a - 18d).

4. The sample grabbing apparatus (2) according to claim 3, wherein a first longitudinal direction (X1) of at least some of the longer sections (28) of the meandering region (18a - 18d) forms a larger angle with the longitudinal direction (L) of the sample grabbing apparatus (2) than a second longitudinal direction (X2) of at least some of the shorter sections (30).

5. The sample grabbing apparatus (2) according to claim 3 or 4, in which the longer sections (28) are longer than the shorter sections (30) by a factor of at least approximately 2, 3, 4, 5, 7, 10, 15, 20, 25 or more than 25.

6. The sample grabbing apparatus (2) according to one of the preceding claims, in which the central component (4), the solid connecting element (16) and the at least one grabbing arm (6a, 6b), which is linked to the central component (4) via said solid connecting element (16), are composed of the same material.

7. The sample grabbing apparatus (2) according to one of the preceding claims, further having a contact retainer (32), in or on which at least one overload contact (34) is received, wherein the contact surface (36) of the overload contact interacts with a stop (38) on the at least one grabbing arm (6a, 6b) in the longitudinal direction (L) of the sample grabbing apparatus (2) such that a linear movement of the grabbing arm (6a, 6b) exceeding a predetermined value in the longitudinal direction (L) creates an electrical separation between the contact surface (36) and the stop (38), wherein the contact retainer (32) is displaceably connected to the central component (4) via a spring element (44), and wherein an adjusting element (46), in particular an adjusting screw, is provided to permit a displacement of the contact retainer (32) in the longitudinal direction (L) counter to a spring force of the spring element (44) so that an initial tension between the contact surface (36) and the stop (38) can be adjusted by means of the adjusting element (46).

8. The sample grabbing apparatus (2) according to one of the preceding claims, in which a stop (38, 38a) is provided on the at least one grabbing arm (6a, 6b), which interacts with a further stop (48, 48a) on the central element (4), and so the linear movement of the at least one grabbing arm (6a, 6b) in the longitudinal axial direction (L) of the sample grabbing apparatus (2) is limited to a maximum value.

9. The sample grabbing apparatus (2) according to one of the preceding claims, wherein the central element (4), the at least one grabbing arm (6a, 6b) and the solid connecting element (16) are made of a metal, in particular stainless steel, and in particular titanium.

10. A measuring device (50), in particular a measuring device for examining samples by means of X-rays, comprising a storage container (52), in particular a low temperature-resistant storage tank (52) for receiving a cryogenic refrigerant, a robot (54), in particular a swivel-arm or gantry robot, and a measuring station (56), in particular having a goniometer (58), for receiving at least one sample during an examination, in particular an X-ray measurement, wherein the robot (54) has a sample grabbing apparatus (2) according to one of the preceding claims for removing the at least one sample from the storage container (52).

## Revendications

1. Dispositif (2) de préhension d'échantillons avec un élément central (4) et au moins deux bras de préhension (6a, 6b) allongés, dans lequel les bras de préhension (6a, 6b) s'étendent dans une direction longitudinale (L) du dispositif (2) de préhension d'échantillons et sont reliés à l'élément central (4) de façon mobile, dans lequel les bras de préhension (6a, 6b) présentent chacun une extrémité avant (8a, 8b) et une extrémité arrière (10a, 10b) opposée dans la direction longitudinale (1), les bras de préhension (6a, 6b), à l'extrémité avant (8a, 8b), présentent un dispositif de préhension (12) pour recevoir un échantillon directement ou indirectement, et, à l'extrémité arrière (10a, 10b) des bras de préhension (6a, 6b), présentent un dispositif d'actionnement (14) qui permet de faire pivoter les bras de préhension (6a, 6b) manuellement et / ou au moyen d'un actionneur pour recevoir ou libérer l'échantillon, au moins un bras de préhension (6a, 6b) étant relié à l'élément central (4) par l'intermédiaire d'un élément de liaison (16) à corps élastique, **caractérisé en ce que** l'élément de liaison (16) à corps élastique comprend une partie en forme de méandre (18a - 18d), le début de la partie en forme de méandre (18a - 18d) présentant une première extrémité (20) qui est reliée à l'élément central (4) et la fin de la portion de la partie en forme de méandre (18a - 18d) présente une deuxième extrémité (22) qui est reliée audit bras de préhension (6a , 6b), l'élément de liaison (16) à corps élastique permettant, par déformation élastique de la partie en forme de méandre (18a - 18d), un mouvement de pivotement dudit au moins un bras de préhension (6a, 6b) et un mouvement linéaire dudit au moins un bras de préhension (6a, 6b) par rapport à l'élément central (4).

2. Dispositif (2) de préhension d'échantillons selon la revendication 1, dans lequel une direction de pivotement (S1, S2) du mouvement de pivotement est orientée au moins approximativement perpendiculairement à la direction longitudinale (L) et une direction de translation (T) du mouvement linéaire est orientée au moins approximativement parallèlement à la direction longitudinale (L).

3. Dispositif (2) de préhension d'échantillons selon la revendication 1 ou la revendication 2, dans lequel l'élément de liaison (16) à corps élastique comprend des parties plus longues et plus courtes (28, 30), qui sont disposées en alternance, de façon en successive, et qui forment la partie en forme de méandre (18a - 18d).

4. Dispositif (2) de préhension d'échantillons selon la revendication 3, dans lequel une première direction longitudinale (X1) d'au moins une partie des portions plus longues (28) de la partie en forme de méandre (18a - 18d) englobe, avec la direction longitudinale (L) du dispositif (2) de préhension d'échantillons, un angle supérieur à celui que forme une deuxième direction longitudinale (X2) d'au moins une partie des portions plus courtes (30).

5. Dispositif (2) de préhension d'échantillons selon la revendication 3 ou la revendication 4, dans lequel les parties allongées (28) sont plus longues d'un facteur d'au moins approximativement 2, 3, 4, 5, 7, 10, 15, 20, 25 ou plus de 25 par rapport aux portions plus courtes (30).

6. Dispositif (2) de préhension d'échantillons selon l'une quelconque des revendications précédentes, dans lequel l'élément central (4), l'élément de liaison (16) à corps élastique et ledit au moins un bras de préhension (6a, 6b) reliant l'élément de liaison (16) à corps élastique à l'élément central (4) sont en une même matière.

7. Dispositif (2) de préhension d'échantillons selon l'une quelconque des revendications précédentes, comprenant en outre un support de contact (32) dans ou sur lequel est incorporé au moins un contact de surcharge (34) dont une surface de contact (36) coopère avec une butée (38) présente sur ledit au moins un bras de préhension (6a, 6b) dans la direction longitudinale (L) du dispositif (2) de préhension d'échantillons, de sorte qu'un mouvement linéaire du bras de préhension (6a, 6b) dans la direction longitudinale (L), qui dépasserait une mesure prédéterminée, provoque une déconnexion électrique entre la surface de contact (36) et la butée (38), le support de contact (32) étant relié de manière coulissante avec l'élément central (4) dans la direction longitudinale (L) par l'intermédiaire d'un élément à ressort (44), et un élément de réglage (46), en particulier une vis de réglage, étant prévu, qui permet un déplacement du support de contact (32) dans la direction longitudinale (L) à l'encontre d'une force élastique de l'élément à ressort (44), de sorte que, au moyen de l'élément de réglage (46), une sollicitation entre la surface de contact (36) et la butée (38) est réglable.

8. Dispositif (2) de préhension d'échantillons selon l'une quelconque des revendications précédentes, dans lequel une butée (38, 38a) est présente sur ledit au moins un bras de préhension (6a, 6b), qui coopère avec une autre butée (48, 48a), laquelle est présente sur l'élément (4) central, de sorte que le mouvement linéaire dudit au moins un bras de préhension (6a, 6b) est limité à une valeur maximale selon la direction axiale longitudinale (L) du dispositif (2) de préhension d'échantillons.

9. Dispositif (2) de préhension d'échantillons selon l'une quelconque des revendications précédentes, dans lequel l'élément central (4), ledit au moins un bras de préhension (6a, 6b) et l'élément de liaison (16) à corps élastique sont constitués en un métal, en particulier en acier inoxydable, ou encore sont fabriqués en particulier en titane.

10. Dispositif de mesure (50), en particulier dispositif de mesure pour l'analyse d'échantillons au moyen de rayons X, comprenant un réservoir de stockage (52), en particulier un réservoir de stockage (52) résistant à de basses températures destiné à recevoir un agent de refroidissement cryogénique, un robot (54), en particulier un bras pivotant ou un robot à portique, et un poste de mesure (56), en particulier un goniomètre (58), pour recevoir ledit au moins un échantillon au cours d'un essai, en particulier une mesure de rayons X, le robot (54) comprenant un dispositif (2) de préhension d'échantillons, afin de retirer le au moins un échantillon hors du réservoir de stockage (52), selon l'une quelconque des revendications précédentes
